# EUROPÄISCHE PATENTSCHRIFT

(11) **EP 1 127 725 B1**
(45) Veröffentlichungstag und Bekanntmachung des Hinweises auf die Patenterteilung: **11.08.2004**
(21) Anmeldenummer: 01102666.3
(22) Anmeldetag: 07.02.2001
(51) Int. Cl.: B60J 7/12

(54) **Faltverdeck für ein Kraftfahrzeug**
Foldable roof for motor vehicle
Toit pliant pour véhicule

(30) Priorität: 24.02.2000 DE 10008492
(43) Veröffentlichungstag der Anmeldung: 29.08.2001
(73) Patentinhaber: Bayerische Motoren Werke Aktiengesellschaft, 80809 München (DE)
(72) Erfinder: Busch, Peter, 84152 Mengkofen (DE)

(56) Entgegenhaltungen:
- DE-A- 19 613 356
- DE-A- 19 741 264
- DE-A- 19 754 189

## Beschreibung

Die Erfindung betrifft ein Faltverdeck für ein Kraftfahrzeug, mit den im Oberbegriff des Patentanspruches 1 angegebenen Merkmalen.

Ein derartiges Faltverdeck ist in der DE 196 13 356 C2 offenbart, und weist ein Verdeckgestänge mit einem aus drei Teilen bestehenden Seitenrahmen auf, bei dem das vordere Seitenrahmenteil über eine Parallelogrammlenkeranordnung mit dem mittleren Seitenrahmenteil verbunden ist. Zur Steuerung der Bewegung des vorderen Seitenrahmenteiles gegenüber dem mittleren Seitenrahmenteil beim Öffnen und Schließen des Faltverdecks ist in dem hinteren Lenker der Parallelogrammlenkeranordnung eine Kulissenführung ausgebildet, in die ein Führungszapfen an einem Ende eines zweiarmigen Hebels verstellbar eingreift, der mit seinem anderen Bereich einen Hebel eines Viergelenks zur Führung des mittleren Seitenrahmenteiles bildet. Die Kulissenführung schwächt den hinteren Lenker, der sich dadurch insbesondere bei einem schwergängig verstellbaren Faltverdeck verformen kann, wenn er nicht entsprechend größer dimensioniert oder mit einer höheren Festigkeit gefertigt ist. Bei dem in Fahrzeugquerrichtung symmetrischen Faltverdeck tragen die seitlich gegenüberliegend in jeweils eine zugeordnete Kulissenführung eingreifenden Zapfen nicht oder kaum zur Stabilität des Faltverdecks bei. Wird das Faltverdeck beim Öffnen oder Schließen beispielsweise ungleichmäßig belastet, so können sich die Zapfen zumindest etwas unterschiedlich in den Kulissenführungen verstellen, wodurch das Faltverdeck eventuell schwergängiger wird, oder nicht zu verstellen ist.

Der Erfindung liegt die Aufgabe zugrunde, ein Faltverdeck für ein Kraftfahrzeug mit den Merkmalen im Oberbegriff des Patentanspruches 1 anzugeben, bei dem das Faltverdeck einen einfacheren Aufbau und eine größere Stabilität aufweist.

Diese Aufgabe ist durch die im Patentanspruch 1 angegebenen Merkmale gelöst. Vorteilhafte Ausgestaltungen der Erfindung sind den Unteransprüchen entnehmbar.

Die zum Verstellen der seitlichen Rahmenteile vorgesehenen Lenker und Hebel sind somit ausschließlich über kostengünstig zu fertigende Drehgelenke mit den betreffenden Teilen verbunden. Die Drehgelenke lassen lediglich eine Schwenkbewegung der betreffenden Teile um eine Fahrzeugquerachse zu und stabilisieren dadurch in jeder Verstelllage das Faltverdeck beim Öffnen und Schließen. Das Faltverdeck läßt sich dadurch gleichmäßiger und mit einem geringeren Kraftaufwand manuell oder motorisch öffnen bzw. schließen. Bilden das vordere Rahmenteil einen Frontspriegel und das mittlere Rahmenteil einen Hauptspriegel, so können sich diese Spriegel in Fahrzeuglängsrichtung über eine Länge von beispielsweise mehreren Dezimetern erstrecken, da die in Schließstellung des Faltverdecks hintereinander angeordneten Spriegel beispielsweise in ihren Seitenbereichen so versetzt anzuordnen sind, dass sie sich beim Öffnen und schließen des Faltverdecks nicht im Verstellbereich des jeweils anderen Teiles oder eines weiteren Teiles des Faltverdecks befinden. In der maximalen Offenstellung des Faltverdecks können das vordere und mittlere Seitenrahmenteil, bzw. der Frontspriegel und Hauptspriegel, platzsparend gleichsinnig gekrümmt übereinander angeordnet werden. Vorzugsweise der in Fahrzeuglängsrichtung eine größere Längserstreckung aufweisende Frontspriegel oder Heckspriegel kann in der maximalen Offenstellung die anderen Teile des Faltverdecks so ganz oder teilweise überdecken, dass eine bei anderen Fahrzeugen zur Abdeckung des geöffneten Faltverdecks vorgesehene Persenning oder ein Verdeckkastendeckel nicht erforderlich sind.

Ein Ausführungsbeispiel der Erfindung wird anhand einer Zeichnung näher erläutert. Es zeigen
- Figur 1: eine vereinfachte Seitenansicht des geschlossenen Faltverdecks,
- Figur 2: eine Figur 1 entsprechende Ansicht von dem teilweise geöffneten Faltverdeck und
- Figur 3: eine den vorhergehenden Figuren entsprechende Ansicht von dem in einem hinteren Aufnahmefach abgelegten Faltverdeck.

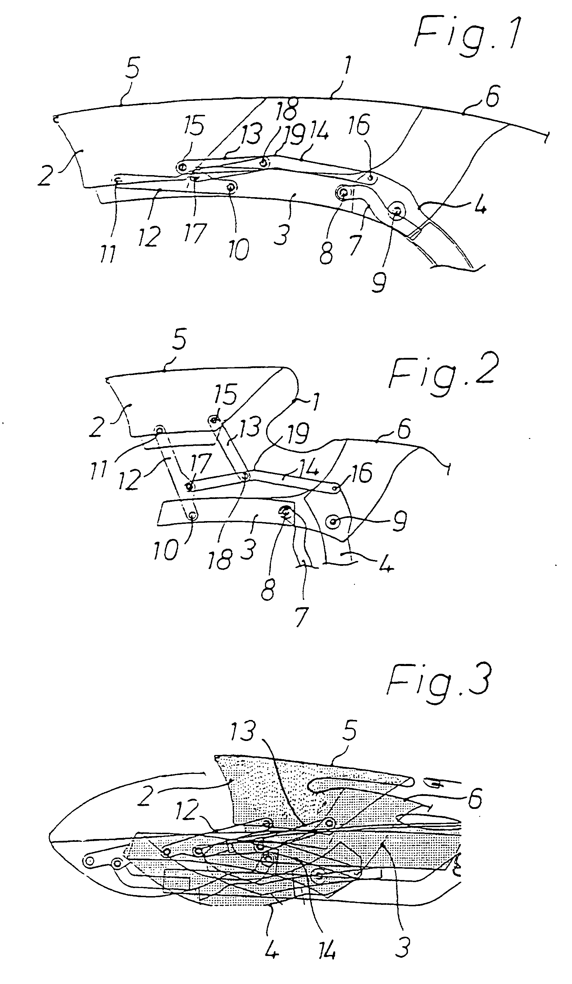

Das in Figur 1 mit seinen wesentlichen Dachteilen in einer Seitenansicht vereinfacht dargestellte Faltverdeck eines Kraftfahrzeugs weist einen Verdeckstoff 1 auf, der von einem Verdeckgestell getragen bzw. gestützt ist. Das Verdeckgestell ist gegenüber einer vertikalen Fahrzeugmittelebene symmetrisch aufgebaut und weist an seinen Seiten jeweils ein vorderes Rahmenteil 2, ein mittleres Rahmenteil 3 und ein hinteres Rahmenteil 4 auf, die in der dargestellten Schließstellung des Faltverdecks etwa bündig hintereinander angeordnet sind. Die beiden seitlich gegenüberliegenden vorderen Rahmenteile 2 sind zu einem Frontspriegel 5 verbunden. Die beiden seitlich gegenüberliegenden mittleren Rahmenteile 3 sind Seitenbereiche eines Hauptspriegels 6, der sich wie der Frontspriegel 5 über die gesamte Dachbreite des Faltverdecks erstreckt, die den Verdeckstoff 1 von unten stützen. Das mittlere Rahmenteil 3 ist über ein Viergelenk verstellbar, bei dem ein Hebel durch das hintere Rahmenteil 4 gebildet ist. Der andere Hebel des Viergelenks bildet einen Hauptlenker 7, der in einem Drehgelenk um eine Fahrzeugquerachse 8 schwenkbar an dem mittleren Rahmenteil 3 angelenkt ist. Das hintere Rahmenteil 4 bildet eine Hauptsäule, die in einem Drehgelenk um eine Fahrzeugquerachse 9 schwenkbar an dem mittleren Rahmenteil 3 angelenkt ist. In der dargestellten Schließstellung befindet sich die Fahrzeugquerachse 8 vor und etwas über der Fahrzeugquerachse 9. Das hintere Rahmenteil 4 und der Hauptlenker 7 sind jeweils an ihrem nicht dargestellten hinteren unteren Ende um jeweils eine Fahrzeugquerachse schwenkbar an einem Hauptlagerbock abgestützt, der an der Fahrzeugkarosserie beispielsweise lösbar befestigt ist. Zwischen dem vorderen Rahmenteil 2 und dem mittleren Rahmenteil 3 ist ein erster Lenker 12 angeordnet, der jeweils in einem Drehgelenk um eine Fahrzeugquerachse 10, 11 einerseits mit dem mittleren Rahmenteil 3 und andererseits mit dem vorderen Rahmenteil 2 gelenkig verbunden ist. Hinter dem ersten Lenker 12 ist ein zweiter Lenker 13 vorgesehen, der hinter der Fahrzeugquerachse 11 in einem Drehgelenk um eine Fahrzeugquerachse 15 schwenkbar mit dem vorderen Rahmenteil 2 verbunden ist. Ein dritter Lenker 14, der in allen Verstelllagen des Faltverdecks etwa horizontal angeordnet ist, greift in einem Drehgelenk um eine Fahrzeugquerachse 16 schwenkbar an dem hinteren Rahmenteil 4 an, wobei die Fahrzeugquerachse 16 in der dargestellten Schließstellung des Faltverdecks in Fahrzeuglängsrichtung etwa zwischen den beiden Fahrzeugquerachsen 8 und 9 und etwas darüber angeordnet ist. An seinem vorderen Bereich greift der dritte Lenker 14 in einem Drehgelenk um eine Fahrzeugquerachse 17 schwenkbar etwa in einem mittleren Bereich des ersten Lenkers 12 zwischen den Fahrzeugquerachsen 10, 11 an. Das in der Schließstellung des Faltverdecks hintere Ende des zweiten Lenkers 13 greift in einem Drehgelenk um eine Fahrzeugquerachse 18 schwenkbar in einem mittleren Längsbereich an dem dritten Lenker 14 an. In der Schließstellung des Faltverdecks sind der erste Lenker 12 nach vorne oben und der zweite 13 Lenker nach vorne unten jeweils aus einer horizontalen Lage etwas geneigt angeordnet. Der dritte Lenker 14 weist in seinem mittleren Längsbereich eine Knickstelle 19 auf, von der sich der dritte Lenker 14 in der Schließstellung des Faltverdecks etwa geradlinig einerseits nach vorne und andererseits nach hinten und jeweils etwas nach unten erstreckt.

In Figur 2 ist das Faltverdeck teilweise geöffnet dargestellt. In dieser Ansicht sind die seitlichen Rahmenteile 2, 3, 4 sowie die seitlichen Lenker 12, 13, 14 und der Hauptlenker 7 deutlicher erkennbar. Der erste und zweite Lenker 12, 13 befinden sich in jeder Lage des Faltverdecks in einer etwa parallelen Lage zueinander. Der einen Hebel eines Viergelenks bildende Hauptlenker 7 ist bei etwas geöffnetem Faltverdeck vor dem hinteren Rahmenteil 4 angeordnet, das die Hauptsäule des Faltverdecks bildet.

In Figur 3 ist das Faltverdeck in seiner maximalen Offenstellung dargestellt, in der das Faltverdeck in ein hinteres Aufnahmefach eingebracht ist. Beim Öffnen des Faltverdecks werden der Frontspriegel 5 und der Hauptspriegel 6 ohne eine wesentliche Schwenkbewegung um eine Fahrzeugquerachse so verstellt, dass sich in der maximalen Offenstellung des Faltverdecks der Frontspriegel 5 platzsparend über dem Hauptspriegel 6 befindet. In Fahrzeugquerrichtung können der Frontspriegel und/oder der Hauptspriegel gekrümmt ausgebildet sein. Damit sich der Hauptspriegel 6, der Hauptlenker 7 und das eine Hauptsäule bildende hintere Rahmenteil 4 beim Öffnen und Schließen des Faltverdecks nicht jeweils im Verstellbereich eines benachbarten Teiles befinden, sind der Hauptspriegel 6 seitlich innen, der Hauptlenker 7 seitlich in der Mitte und das die Hauptsäule bildende hintere Rahmenteil 4 seitlich außen angeordnet.

Die Abmessungen und die Form der bei dem Faltverdeck verwendeten Teile können auch von dem Ausführungsbeispiel abweichend ausgebildet sein. Das Faltverdeck wurde anhand eines einen Verdeckstoff stützenden Verdeckgestells beschrieben. Ebenso ist es denkbar, dass insbesondere die Rahmenteile so ausgebildet sind, dass sie ohne einen Verdeckstoff ein als Klappdach ausgebildetes Faltverdeck bilden. Ebenso ist es möglich, dass beispielsweise das vordere und mittlere Rahmenteil ein festes Dachteil bilden, an das sich lediglich hinten ein von einem hinteren Verdeckgestell gestützter Verdeckstoff anschließt.

## Patentansprüche

1. Faltverdeck für ein Kraftfahrzeug, mit einem Verdeckgestell, das seitlich ein vorderes (2), mittleres (3) und hinteres (4) Rahmenteil aufweist, von denen das mittlere Rahmenteil (3) über ein Viergelenk verstellbar ist, bei dem ein Hebel durch das hintere Rahmenteil (4) gebildet ist, und das vordere Rahmenteil (2) über drei Lenker gegenüber dem mittleren Rahmenteil verstellbar ist, von denen jeweils in einem Drehgelenk um eine Fahrzeugquerachse schwenkbar der erste und zweite Lenker (12, 13) hintereinander an dem vorderen Rahmenteil (2) und andererseits der erste Lenker an dem mittleren Rahmenteil (3) angelenkt sind, **dadurch gekennzeichnet, dass** der dritte Lenker (14) jeweils in einem Drehgelenk um eine Fahrzeugquerachse (16, 17) schwenkbar am hinteren Rahmenteil (4) und andererseits an dem ersten Lenker (12) gelenkig befestigt ist und andererseits der zweite Lenker (13) in einem Drehgelenk um eine Fahrzeugquerachse (18) schwenkbar an dem dritten Lenker (14) angelenkt ist.

2. Faltverdeck nach Anspruch 1, **dadurch gekennzeichnet, dass** der dritte Lenker (14) etwa in einem mittleren Längsbereich des ersten Lenkers (12) an diesem angelenkt ist.

3. Faltverdeck nach Anspruch 1 oder 2, **dadurch gekennzeichnet, dass** der zweite Lenker (13) etwa in einem mittleren Längsbereich des dritten Lenkers (14) an diesem angelenkt ist.

4. Faltverdeck nach einem der Ansprüche 1 bis 3, **dadurch gekennzeichnet, dass** sich das Drehgelenk (Fahrzeugquerachse 16) zwischen dem dritten Lenker (14) und dem hinteren Rahmenteil (4) in Schließstellung des Faltverdecks vor und über dem Drehgelenk (Fahrzeugquerachse 9) zwischen dem hinteren Rahmenteil (4) und dem mittleren Rahmenteil (3) befindet.

5. Faltverdeck nach einem der Ansprüche 1 bis 4, **dadurch gekennzeichnet, dass** in Schließstellung des Faltverdecks der erste Lenker (12) nach vorne oben und der zweite Lenker (13) nach vorne unten jeweils aus einer horizontalen Lage etwas geneigt angeordnet sind.

6. Faltverdeck nach einem der Ansprüche 1 bis 5, **dadurch gekennzeichnet, dass** sich der dritte Lenker (14) in allen Stellungen des Faltverdecks in einer etwa horizontalen Lage befindet.

7. Faltverdeck nach einem der Ansprüche 1 bis 6, **dadurch gekennzeichnet, dass** der dritte Lenker (14) in seinem mittleren Bereich eine Knickstelle (19) aufweist, von der sich der dritte Lenker (14) in der Schließstellung des Faltverdecks einerseits nach vorne und andererseits nach hinten und jeweils etwas nach unten erstreckt.

8. Faltverdeck nach einem der Ansprüche 1 bis 7, **dadurch gekennzeichnet, dass** das vordere Rahmenteil (2) einen Seitenbereich eines Frontspriegels (5) und das mittlere Rahmenteil (3) einen Seitenbereich eines Hauptspriegels (6) bilden, wobei sich der Frontspriegel (5) und der Hauptspriegel (6) über die gesamte Dachbreite des Faltverdecks erstrecken.

9. Faltverdeck nach einem der Ansprüche 1 bis 8, **dadurch gekennzeichnet, dass** sich der erste und zweite Lenker (12, 13) in jeder Lage des Faltverdecks in einer etwa parallelen Lage zueinander befinden.

10. Faltverdeck nach einem der Ansprüche 1 bis 9, **dadurch gekennzeichnet, dass** das hintere Rahmenteil (4) eine Hauptsäule und der zweite Hebel des Viergelenks ein Hauptlenker (7) sind, wobei der Hauptlenker (7) bei teilweise oder ganz geöffnetem Faltverdeck vor dem eine Hauptsäule bildenden hinteren Rahmenteil (4) an dem mittleren Rahmenteil (3) angelenkt ist.

11. Faltverdeck nach einem der Ansprüche 8 bis 10, **dadurch gekennzeichnet, dass** beim Öffnen des Faltverdecks der Frontspriegel (5) und der Hauptspriegel (6) ohne eine wesentliche Schwenkbewegung um eine Fahrzeugquerachse so verstellt werden, dass sich in der maximalen Offenstellung des Faltverdecks in einem hinteren Aufnahmeraum der Frontspriegel (5) zumindest teilweise über dem Hauptspriegel (6) befindet und die übrigen Teile des Faltverdecks zumindest teilweise überdeckt.

## Claims

1. A folding top for a motor vehicle comprising a frame with lateral front (2) middle (3) and rear (4) parts, the middle part (3) being adjustable via a four-bar linkage wherein one lever is formed by the rear part (4) and the front part (2) is adjustable relative to the middle part by three control arms, the first and second control arms (12, 13) being each rotatable in a swivel joint around a transverse axis of the vehicle and pivoted one behind the other to the front frame part (2), whereas the other end of the first control arm is pivoted to the middle frame part (3), **characterised in that** the third control arm (14) is rotatable in a swivel joint around a transverse axis (16, 17) and pivotably fastened to the rear part (4) and its other end is fastened to the first control arm (12), and the other end of the second control arm (13) is rotatable in a swivel joint around a transverse axis (18) of the vehicle and is pivoted to the third control arm (14).

2. A folding top according to claim 1, **characterised in that** the third control arm (14) is pivoted to the first control arm (12) approximately in a central longitudinal region thereof.

3. A folding top according to claim 1 or claim 2, **characterised in that** the second control arm (13) is pivoted to the third control arm (14) approximately in a central longitudinal region thereof.

4. A folding top according to any of claims 1 to 3, **characterised in that** the swivel joint (vehicle transverse axis 16), when the folding top is in the closed position, is between the third control arm (14) and the rear frame part (4) and in front of and over the swivel joint (vehicle transverse axis 9) between the rear frame part (4) and the middle frame part (3).

5. A folding top according to any of claims 1 to 4, **characterised in that** when the folding top is in the closed position the first control arm (12) is somewhat inclined forwards and upwards and the second control arm (13) is inclined somewhat forwards and downwards, in each case out of a horizontal position.

6. A folding top according to any of claims 1 to 5, **characterised in that** the third control arm (14) is in an approximately horizontal position in all positions of the folding top.

7. A folding top according to any of claims 1 to 6, **characterised in that** the third control arm (14) in its middle region has a bend (19) from which the third control arm (14), when the folding top is in the closed position, extends forwards at one end and backwards at the other end, somewhat downwards in each case.

8. A folding top according to any of claims 1 to 7, **characterised in that** the front frame part (2) forms a side region of a front hoop (5) and the middle frame part (3) forms a side region of a main hoop (6), wherein the front hoop (5) and the main hoop (6) extend over the entire width of the folding top.

9. A folding top according to any of claims 1 to 8, **characterised in that** in each position of the folding top the first arid second control arms (12, 13) are approximately parallel.

10. A folding top according to any of claims 1 to 9, **characterised in that** the rear frame part (4) is a main column and the second lever of the four-bar linkage is a main control arm (7), wherein the main control arm (7) when the folding top is partly or completely open, is pivoted to the middle frame part (3) in front of the rear front part (4) which forms a main column.

11. A folding top according to any of claims 8 to 10, **characterised in that** when the folding top is opened, the front hoop (5) and the main hoop (6) are so adjusted without substantial rotation around a transverse axis of the vehicle that when the folding top is in the maximum open position the front hoop (5) is disposed at least partly over the main hoop (6) in a rear receiving compartment and at least partly covers the other parts of the folding top.

## Revendications

1. Capote pliante pour un véhicule automobile, comportant une armature de capote, qui présente latéralement une partie de cadre avant (2), centrale (3) et arrière (4), parmi lesquelles la partie de cadre centrale (3) peut être déplacée par le biais d'un ensemble à quatre articulations, un levier étant configuré par la partie de cadre arrière (4) et la partie de cadre avant (2) pouvant être déplacée par rapport à la partie de cadre centrale par le biais de trois bielles, parmi lesquelles, d'une part la première et la deuxième bielle (12, 13) sont articulées l'une derrière l'autre de façon pivotante dans une articulation rotative autour d'un axe transversal du véhicule au niveau de la partie de cadre avant (2) et d'autre part la première bielle est articulée au niveau de la partie de cadre centrale (3),
**caractérisée en ce que**
la troisième bielle (14) est fixée de façon pivotante d'une part dans une articulation rotative autour d'un axe transversal du véhicule (16, 17) au niveau de la partie de cadre arrière (4) et d'autre part de façon articulée à la première bielle (12), et en outre la deuxième bielle (13) est articulée de façon pivotante par une articulation rotative autour d'un axe transversal du véhicule (18) au niveau de la troisième bielle (14).

2. Capote pliante selon la revendication 1,
**caractérisée en ce que**
la troisième bielle (14) est articulée approximativement dans une zone longitudinale centrale de la première bielle (12) au niveau de celle-ci.

3. Capote pliante selon la revendication 1 ou 2,
**caractérisée en ce que**
la deuxième bielle (13) est articulée approximativement dans une zone longitudinale centrale de la troisième bielle (14) au niveau de celle-ci.

4. Capote pliante selon l'une quelconque des revendications 1 à 3,
**caractérisée en ce que**
l'articulation rotative (axe transversal du véhicule 16) située entre la troisième bielle (14) et la partie de cadre arrière (4) se trouve, en position de fermeture de la capote pliante, devant et au-dessus de l'articulation rotative (axe transversal du véhicule 9) située entre la partie de cadre arrière (4) et la partie de cadre centrale (3).

5. Capote pliante selon l'une quelconque des revendications 1 à 4,
**caractérisée en ce que**
dans la position de fermeture de la capote pliante, la première bielle (12) est disposée de façon légèrement inclinée vers l'avant et vers le haut, et la deuxième bielle (13) est disposée de façon légèrement inclinée vers l'avant et vers le bas, chacune à partir d'une position horizontale.

6. Capote pliante selon l'une quelconque des revendications 1 à 5,
**caractérisée en ce que**
la troisième bielle (14) se trouve, dans toutes les positions de la capote pliante, dans une position approximativement horizontale.

7. Capote pliante selon l'une quelconque des revendications 1 à 6,
**caractérisée en ce que**
la troisième bielle (14) présente un pli (19) dans sa zone centrale, à partir duquel la troisième bielle (14), en position de fermeture de la capote pliante, s'étend d'une part vers l'avant et d'autre part vers l'arrière et chaque fois légèrement vers le bas.

8. Capote pliante selon l'une quelconque des revendications 1 à 7,
**caractérisée en ce que**
la partie de cadre avant (2) forme une zone latérale de l'arceau avant (5) et la partie de cadre centrale (3) forme une zone latérale de l'arceau principal (6), l'arceau avant (5) et l'arceau principal (6) s'étendant sur toute la largeur de toit de la capote pliante.

9. Capote pliante selon l'une quelconque des revendications 1 à 8,
**caractérisée en ce que**
la première et la deuxième bielle (12, 13) se trouvent, dans chaque position de la capote pliante, dans une disposition approximativement parallèle l'une par rapport à l'autre.

10. Capote pliante selon l'une quelconque des revendications 1 à 9,
**caractérisée en ce que**
la partie de cadre arrière (4) est une colonne principale et le deuxième levier de l'ensemble à quatre articulations est une bielle principale (7), la bielle principale (7) étant articulée, lorsque la capote pliante est en partie ou totalement ouverte, devant la partie de cadre arrière (4) formant une colonne principale, au niveau de la partie de cadre centrale (3).

11. Capote pliante selon l'une quelconque des revendications 8 à 10,
**caractérisée en ce que**
lors de l'ouverture de la capote pliante, l'arceau avant (5) et l'arceau principal (6) sont déplacés sans mouvement de pivotement important autour d'un axe transversal du véhicule, de telle sorte que dans la position d'ouverture maximale de la capote pliante dans un compartiment de logement arrière, l'arceau avant (5) se trouve au moins en partie au-dessus de l'arceau principal (6) et recouvre au moins partiellement les autres pièces de la capote pliante.
